(19) Europäisches Patentamt
European Patent Office
Office européen des brevets

(11) Veröffentlichungsnummer: **0 029 929**
**B1**

(12) # EUROPÄISCHE PATENTSCHRIFT

(45) Veröffentlichungstag der Patentschrift: **21.07.82**

(51) Int. Cl.³: **C 09 D 3/82**, C 08 L 83/06, C 08 G 77/20, C 08 J 7/04

(21) Anmeldenummer: **80106810.7**

(22) Anmeldetag: **05.11.80**

(54) **Härtbare Überzugsmittel und Verfahren zur Herstellung kratzfester Überzüge auf Kunststoffen.**

(30) Priorität: **17.11.79 DE 2946474**

(43) Veröffentlichungstag der Anmeldung: **10.06.81 (Patentblatt 81/23)**

(45) Bekanntmachung des Hinweises auf die Patenterteilung: **21.07.82 Patentblatt 82/29**

(84) Benannte Vertragsstaaten: **BE DE FR GB IT NL**

(56) Entgegenhaltungen: **DE - A - 1 957 356**

(73) Patentinhaber: **BASF Aktiengesellschaft**
**Carl-Bosch-Strasse 38**
**D-6700 Ludwigshafen (DE)**

(72) Erfinder: **Jaeckel, Klaus-Peter, Dr.**
**Feuerbachstrasse 21**
**D-6703 Limburgerhof (DE)**
Erfinder: **Heil, Guenter, Dr.**
**Dirmsteiner Weg 41**
**D-6700 Ludwigshafen (DE)**
Erfinder: **Spoor, Herbert, Dr.**
**Woogstrasse 44**
**D-6703 Limburgerhof (DE)**

**EP 0 029 929 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

Härtbare Überzugsmittel und Verfahren zur Herstellung kratzfester Überzüge auf Kunststoffen

Die vorliegende Erfindung betrifft härtbare Überzugsmittel auf Basis olefinisch ungesättigter Polysiloxane, Verfahren zur Herstellung kratzfester Überzüge auf Kunststoffen unter Verwendung dieser Überzugsmittel sowie nach diesem Verfahren beschichtete Kunststoffe.

Aus der DE-AS 19 57 357 sind Reaktionsprodukte aus ungesättigten Siloxanen mit olefinisch ungesättigten Epoxidharzen und/oder olefinisch ungesättigten Diurethanen und deren Härtung mit Elektronenstrahlen bekannt.

Weiterhin ist ein ähnlich aushärtbares System in der DE-AS 19 57 358 beschrieben, das aus einem olefinisch ungesättigten Siloxan und einem α,β-olefinisch ungesättigten Polyester besteht. Die Filme sind gut ausgehärtet und witterungsbeständig, entsprechen jedoch in Abrieb- und Kratzfestigkeit keinesfalls den Anforderungen. So werden u.a. von den ausgehärteten Filmen Bleistifthärten von 9 H gefordert, die, wie Beispiel 1 der DE-AS 19 57 358 zeigt (Bleistifthärte H), von den vorbeschriebenen Überzügen bei weitem nicht erreicht werden.

Das Ziel der vorliegenden Erfindung war es, Überzugsmittel insbesondere für Kunststoffe wie Polymethymethacrylat, Polycarbonate, Polystyrol, Styrol/Acrylnitril-Copolymerisate und Polyvinylchlorid zu entwickeln, die neben einer guten Haftung, Transparenz und einem guten Verlauf eine ausgezeichnete Abrieb- und Kratzfestigkeit aufweisen. Die mechanische Beanspruchbarkeit der Kunststoffoberfläche sollte durch diese Überzüge deutlich verbessert werden, wodurch transparente Kunststoffe als Glasersatz vornehmlich in der Automobilindustrie Verwendung finden könnten.

Gegenstand der vorliegenden Erfindung sind härtbare Überzugsmittel auf Basis olefinisch ungesättigter Polysiloxane, die dadurch gekennzeichnet sind, daß das olefinisch ungesättigte Polysiloxan ein Polykondensationsprodukt ist aus

a) 1 bis 40 Gew.-% eines mindestens zwei C-C-Doppelbindungen und mindestens eine Hydroxi- und/oder Alkoxigruppe pro Molekül enthaltenden Umsetzungsprodukts aus einem olefinisch ungesättigten Silan mit mindestens 2 Hydroxi- oder $C_1$-$C_4$-Alkoxigruppen, dessen olefinisch ungesättigter organischer Rest über eine C-Si-Bindung gebunden ist, und einem hydroxylgruppenhaltigen α,β-olefinisch ungesättigten Monomeren ;

b) 20 bis 80 Gew.-% eines olefinisch ungesättigten Silans der allgemeinen Formel

$$R^1—Si(OR^2)_3$$

wobei $R^1$ für einen über eine C-Si-Bindung an das Si-Atom gebundenen Vinyl- oder (Meth)Acrylsäure-$C_2$-$C_8$-alkyl-esterrest und $R^2$ für Wasserstoff oder einen gesättigten Kohlenwasserstoffrest mit 1 bis 4 Kohlenstoffatomen stehen ;

c) 5 bis 55 Gew.-% eines gesättigten Silans der allgemeinen Formel

$$R^3 - \underset{OR^2}{\overset{R^4}{Si}} - OR^2$$

wobei $R^2$ die oben angegebene Bedeutung hat, $R^3$ und $R^4$ untereinander gleich oder verschieden sind und für gesättigte Kohlenwasserstoffreste mit 1 bis 6 Kohlenstoffatomen der gegebenenfalls $C_1$-$C_4$-alkylsubstituierte aromatische Kohlenwasserstoffatomen stehen, und

d) 0 bis 30 Gew.-% eines epoxidgruppenhaltigen Silans mit mindestens 2 Hydroxi- oder $C_1$-$C_4$-Alkoxigruppen ;

sowie derartige härtbare Überzugsmittel, die zusätzlich ein olefinisch ungesättigtes Umsetzungsprodukt aus (Meth)-Acrylsäure und Polyalkoholen bzw. Polyetherolen in einem bis 8fachen Überschuß, bezogen auf die Gewichtsmenge des Polykondensats, enthalten.

Gegenstand der vorliegenden Erfindung ist außerdem ein Verfahren zur Herstellung kratzfester Überzüge auf Kunststoffoberflächen, wobei die erfindungsgemäßen härtbaren Überzugsmittel in üblicher Weise auf Kunststoffoberflächen aufgebracht und mittels ionisierender Strahlung, durch Wärmeeinwirkung in Gegenwart radikalliefernder Initiatoren oder Initiatorsystem, oder durch Bestrahlung mit UV-Licht in Gegenwart üblicher Photoinitiatoren gehärtet werden.

Erfindungsgemäß werden ferner Gegenstände aus Kunststoff, die nach diesem Verfahren überzogen sind, beansprucht.

Mit den erfindungsgemäßen Überzugsmitteln gelingt es nach Härtung durch ionisierende Strahlung, UV-Strahlung oder Wärmeeinwirkung überraschenderweise auf Kunststoffen transparente, gut haftende, sehr harte Überzüge mit ausgezeichneter Abrieb- und Kratzfestigkeit herzustellen.

Zu den Aufbaukomponenten der erfindungsgemäßen Überzugsmittel ist im einzelnen folgendes auszuführen.

Das olefinisch ungesättigte Polysiloxan ist ein Polykondensationsprodukt aus den Komponenten (a), (b), (c) und gegebenenfalls (d).

a) Als mindestens zwei C-C-Doppelbindungen und mindestens eine Hydroxi- und/oder Alkoxigruppe pro Molekül enthaltende Umsetzungsprodukte aus einem olefinisch ungesättigten Silan mit mindestens 2 Hydroxi- oder $C_1$-$C_4$-Alkoxigruppen, dessen olefinisch ungesättigter organischer Rest über eine C-Si-Bindung gebunden ist, und einem hydroxylgruppenhaltigen α,β-olefinisch ungesättigten Monomeren eignen sich z.B. Umsetzungsprodukte aus Hydroxialkyl(meth)acrylaten mit 2 bis 8 Kohlenstoffatomen in der Alkylgruppe, wie Hydroxiethyl(meth)acrylat oder 2-Hydroxipropyl(meth)acrylat und einem olefinisch ungesättigten Silan, dessen olefinisch ungesättigter organischer Rest über eine C-Si-Bindung gebunden ist und das mindestens 2 Hydroxi- oder Alkoxigruppen mit 1 bis 4 Kohlenstoffatomen im Alkoxirest enthält.

Die zur Herstellung der Komponente (a) geeigneten olefinisch ungesättigten Silane enthalten als olefinisch ungesättigten Reste beispielsweise Vinyl-, Acryloxialkyl-, Methacryloxialkylreste jeweils mit 2 bis 6 vorzugsweise 2 bis 4 Kohlenstoffatomen im Alkylrest sowie als Alkoxigruppen solche mit 1 bis 4, vorzugsweise 1 bis 2 Kohlenstoffatomen.

Beispiele von zur Herstellung der Komponente (a) besonders geeigneten olefinisch ungesättigten Silanen sind Vinyltrimethoxisilan, Vinyltriethoxisilan, γ-Methacryloxipropyltrimethoxisilan und γ-Methacryloxipropyltriethoxysilan.

Zur Herstellung der Komponente (a) wird das olefinisch ungesättigte Silan mit dem Hydroxialkyl-(meth)acrylat im Molverhältnis von 1 : 1 bis 1 : 2 (Silan : Hydroxiacrylat) umgesetzt. Diese Reaktion wird zweckmäßigerweise bei Temperaturen von 65 bis 170, vorzugsweise 80 bis 150 °C, gegebenenfalls in Gegenwart von Lösungsmitteln, wie Toluol oder Xylol und Veresterungs-Katalysatoren, wie Salzsäure, Schwefelsäure, p-Toluol-sulfonsäure, Tetraisopropyltitanat u.a. durchgeführt.

Komponente (a) wird zur Herstellung des erfindungsgemäßen Polykondensationsproduktes in Mengen von 1 bis 40, vorzugsweise 5 bis 25 Gew.-%, bezogen auf die Summe der Prozentzahlen von (a) + (b) + (c) + (d) eingesetzt,

b) Geeignete olefinisch ungesättigte Silane der allgemeinen Formel

$$R^1—Si(OR^2)_3$$

wobei $R^1$ für einen über eine C-Si-Bindung an das Si-Atom gebundene Vinyl- oder (Meth)acrylsäure-$C_2$-$C_8$-alkylesterrest und $R^2$ für Wasserstoff oder einen gesättigten Kohlenwasserstoffrest mit 1 bis 4 Kohlenstoffatome stehen sind z.B. Vinyltrimethoxisilan, Vinyltriethoxysilan, γ-Methacryloxipropyltrimethoxisilan und γ-Methacryloxipropyltriethoxisilan, hiervon bevorzugt Vinyltriethoxisilan und γ-Methacryloxipropyltri-methoxisilan.

Komponente (b) wird zur Herstellung des erfindungsgemäßen Polykondensationsproduktes in Mengen von 20 bis 80, vorzugsweise 35 bis 70 Gew.-%, bezogen auf die Summe der Prozentzahlen von (a) + (b) + (c) + (d) eingesetzt.

c) Geeignete gesättigte Silane der allgemeinen Formel

$$R^3 - \underset{\substack{| \\ OR^2}}{\overset{\substack{R^4 \\ |}}{Si}} - OR^2$$

wobei $R^2$ die oben angegebene Bedeutung hat, $R^3$ und $R^4$ untereinander gleich oder verschieden sind und für gesättigte Kohlenwasserstoffreste mit 1 bis 6 Kohlenstoffatomen oder, gegebenenfalls $C_1$-$C_4$-alkylsubstituierte, aromatische Kohlenwasserstoffreste stehen, sind beispielsweise Dimethyldimethoxisilan, Dimethyldiethoxisilan, Dimethyldibutoxisilan, Diphenyldimethoxisilan, Diphenyldiethoxisilan und Diphenyldibutoxisilan. Besonders bevorzugt ist Dimethyldibutoxisilan. Komponente (c) bewirkt infolge ihrer Bifunktionalität einen gezielten linearen Aufbau des erfindungsgemäßen Polykondensationsproduktes und wird in einer Menge von 5 bis 55, vorzugsweise 20 bis 40 Gew.-%, bezogen auf die Summe der Prozentzahlen von (a) + (b) + (c) +(d) eingesetzt.

d) Als epoxidgruppenhaltige Silane mit mindestens 2 Hydroxi- oder Alkoxigruppen kommen beispielsweise γ-Glycidoxipropyltrialkoxisilane mit 1 bis 4 Kohlenstoffatome enthaltenden Alkoxigruppen, wie γ-Glycidoxiyltrimethoxisilan, γ-Glycidoxipropyltriethoxisilan, γ-Glycidoxipropyltributoxisilan, β-(3,4-Epoxicyclohexyl)ethyltrialkoxisilan mit 1 bis 4 Kohlenstoffatome enthaltenden Alkoxigruppen, wie β-(3,4-Epoxicyclohexyl)ethyltrimethoxisilan, -triethoxisilan, -tributoxisilan und Mischungen dieser Verbindungen in Frage. Bevorzugt als Komponente (d) ist γ-Glycidoxipropyltrimethoxisilan.

Komponente (d) kann zur Herstellung der erfindungsgemäßen Polykondensationsprodukte in Mengen von 0 bis 30, vorzugsweise 5 bis 20 Gew.%, bezogen auf die Summe der Prozentzahlen von (a) + (b) + (c) + (d) verwendet werden. Die Mitverwendung der Komponenten (d) trägt zur Verbesserung der Haftfestigkeit der Überzüge auf dem Substrat bei.

Zur Herstellung der erfindungsgemäßen Überzugsmittel werden die Komponenten (a) bis (d) zweckmäßigerweise in Gegenwart von mindestens 5fachem molaren Überschuß an Wasser säurekatalysiert cokondensiert, wobei zunächst das gesamte Reaktionsgemisch ca. 4 bis 8 Stunden auf 50 bis 80 °C erhitzt und anschließend der entstandene Alkohol als Alkohol-Wasser-Azeotrop teils bei Normaldruck,

teils unter vermindertem Druck abdestilliert wird.

Als sauere Katalysatoren eignen sich die für Kondensationsreaktionen üblichen organischen und anorganischen Verbindungen, wie p-Toluolsulfonsäure, hypophosphorige Säure, Vanadinpentoxid, Antimontrioxid, Salzsäure, Schwefelsäure.

Das entstandene erfindungsgemäße Polykondensat kann sowohl unverdünnt als auch in Lösung weiterverarbeitet werden. Als organische Lösungsmittel eignen sich insbesondere aromatische Kohlenwasserstoffe, Ester, Ketone, Alkohole oder deren Gemische, sofern sie das zu überziehende Kunststoffsubstrat nicht angreifen. Besonders geeignete Lösungsmittel sind Alkohole wie i-Propanol und n-Butanol.

Die erfindungsgemäßen Polysiloxane enthalten die in den folgenden Formeln aufgeführten Einheiten :

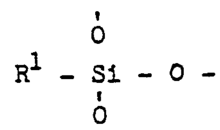

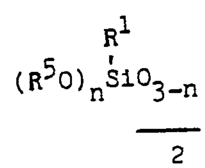

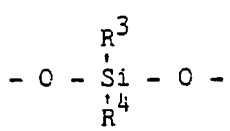 und ggf. 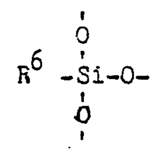

wobei n = 1 oder 2 ist, $R^1$, $R^3$ und $R^4$ die oben angegebene Bedeutung haben, $R^5$ für α,β-olefinisch ungesättigte organische Esterradikale der (Meth)Acrylsäure mit 2 bis 8 C-Atomen enthaltenden Diolen und $R^6$ für epoxidgruppenhaltige organische Etherradikale mit einer Glycidylgruppe und einem 2 bis 8 Kohlenstoffatome enthaltenden Etherrest stehen.

Die erfindungsgemäßen Polykondensate weisen im allgemeinen Molekulargewichte zwischen 500 und 10 000, vorzugsweise zwischen 800 und 3 000 auf.

Als Vernetzerkomponente können dem erfindungsgemäßen Polysiloxan mehrfach olefinisch ungesättigte Monomere zugesetzt werden, beispielsweise solche, die man durch Umsetzung von (Meth)Acrylsäure mit Polyolen bzw. Polyetherolen erhält. Bevorzugte Monomere dieser Art sind Ethylenglykol-, Propandiol-, Butandiol-, Diethylenglykol-, Triethylenglykol-, Tetraethylenglykoldi(meth)acrylat ; Besonders bevorzugt sind Butandioldiacrylat und Tetraethylenglykoldiacrylat.

Diese zusätzlichen Vernetzerkomponenten können mit den erfindungsgemäßen olefinisch ungesättigten Polysiloxanen in bis zu achtfachem Überschuß, vorzugsweise 1 bis 6-fachem Überschuß bezogen auf Polysiloxan kombiniert werden.

Die erfindungsgemäßen Überzugsmittel eignen sich zur Herstellung kratzfester Überzüge auf Kunststoffoberflächen, wie auf Polymethylmethacrylat, Polycarbonat, Polystyrol, SAN (= Styrol/Acrylnitril)-Copolymerisaten und Polyvinylchlorid.

Die Überzugsmittel werden durch übliche Applikationsverfahren wie Spritzen, Rakeln oder Tauchen auf das zu lackierende Substrat aufgebracht, wobei die Schichtdicke aus wirtschaftlichen Gründen 50 µm nicht überschreiten sollte.

Die Aushärtung der Lackfilme erfolgt bevorzugt mit Hilfe ionisierender Strahlung, vorzugsweise in Form von Elektronenstrahlen mit einer Durchschnittsenergie von 100 000 bis 250 000 Elektronenvolt. Die Gesamtdosierung dieser Strahlung liegt im allgemeinen zwischen 3 und 20 Mrad.

Als Strahlungsquellen kommen die für die Elektronenstrahlhärtung von Lacken üblicherweise verwendeten in Frage.

Auch energiereiches Licht (UV-Strahlen) in Kombination mit üblichen Photoinitiatoren wie Benzophenon, Benzildimethylketal, 2-Hydroxi-2-methyl-propiophenon, Thioxanthon und dessen Derivate, Benzoinalkyläther sowie Kombinationen dieser Photoinitiatoren mit Synergisten (z.B. tert. Amine) kann die Vernetzungsreaktion zur Härtung der erfindungsgemäßen Überzüge initiieren.

Die erfindungsgemäßen Überzüge können aber auch thermisch in Gegenwart radikalliefernder Initiatoren oder Initiatorsysteme, z.B. durch peroxidisch initiierte Polymerisation gehärtet werden. Als Peroxide sind besonders solche bevorzugt, die bei einer Temperatur von 60 bis 120 °C Halbwertszeiten von maximal 1 Stunde haben und darüber hinaus neben der Vernetzung des Lackfilmes auch Pfropfreaktionen des Überzuges mit dem Substrat ermöglichen. Als bevorzugte Peroxide können tert.

Butylperbenzoat, tert. Butylperoctoat, Cyclohexanonperoxid und tert. Butylperpivalat eingesetzt werden. Der Luftsauerstoff kann durch Zusatz von Cobaltsalzen wie Cobaltoctoat, Cobaltnaphtenat u.a. komplex gebunden werden, so daß seine inhibierende Wirkung auf die Vernetzungsreaktion stark reduziert wird. Darüber hinaus beschleunigen Cobaltsalze durch Komplexbildung den Zerfall des peroxidischen Initiators. Die Härtungstemperaturen liegen zwischen 60 und 120 °C. Besonders bevorzugt ist der Temperaturbereich von 80 bis 100 °C. Die Härtungszeit beträgt maximal 2 Stunden und ist abhängig von der zugesetzten Menge des Cobaltsalzes.

Die Kunststoffoberflächen werden zweckmäßigerweise vor dem Lackieren sorgfältig gereinigt und getrocknet. Hierzu können die Platten z.B. zunächst mit spülmittelhaltigem Wasser gewaschen, anschließend mit Alkohol oder anderen organischen Lösungsmitteln, die die Kunststoffoberfläche nicht angreifen, von organischen Verunreinigungen befreit und danach 30 Minuten bei 50 °C getrocknet werden. Die so gereinigten Platten lagert man zweckmäßig bis zur Verarbeitung in einem Exsikator oder ähnlichen Behältern.

In den folgenden Beispielen werden die erfindungsgemäßen Überzüge näher erläutert. Die in den Beispielen angegebenen Teile und Prozente sind Gewichtsteile bzw. Gewichtsprozente.

I. Herstellung der Komponente (a) :

Beispiel 1

56,1 Teile Vinyltrimethoxisilan (VTMO) und 43,9 Teile Hydroxiethylacrylat (HEA) werden unter Rühren in Gegenwart von 0,5 % p-Toluolsulfonsäure und 0,1 % Methylhydrochinon 3 Stunden auf 120 °C erhitzt. Das dabei entstandene Methanol wird zunächst bei Normaldruck, danach unter leichtem Vakuum über eine Destillationsvorrichtung mit Füllkörperkolonne abdestilliert. Durch weitere Reduzierung des Druckes auf ca. 10 Torr entfernt man anschließend die nicht umgesetzten Ausgangsprodukte aus dem Reaktionsgemisch.

Beispiel 2

Analog Beispiel 1 werden 46 Teile VTMO und 54 Teile HEA kondensiert.

Beispiel 3

39 Teile VTMO und 61 Teile HEA werden in der in Beispiel 1 beschriebenen Weise umgesetzt.

Beispiel 4

53,2 Teile VTMO und 46,8 Teile Hydroxipropylacrylat (HPA) werden, wie in Beispiel 1 beschrieben, umgesetzt.

Beispiel 5

Analog Beispiel 1 kondensiert man 43,2 Teile VTMO mit 56,8 Teilen HPA.

II. Herstellung der erfindungsgemäßen Polykondensationsprodukte :

Beispiele 6-15

Die in Tabelle 1 zusammengestellten Monomerkombinationen der Beispiele 6 bis 15 werden wie folgt zu ungesättigten Polysiloxanen kondensiert.

Die Silane rührt man in Gegenwart von Wasser (10 molarer Überschuß) und unter Zusatz von 0,02 % Vanadinpentoxid 5 Stunden bei 50 °C. Danach destilliert man den angefallenen Alkohol zusammen mit dem überschüssigen Wasser als Azeotrop bei einer Badtemperatur von 110 °C ab, wobei gegen Ende die Reaktion unter vermindertem Druck durchgeführt wird. Das Reaktionsprodukt kann entweder unverdünnt oder in i-Propanol gelöst weiterverarbeitet werden.

(Siehe die Tabelle, Seite 6)

Tabelle 1

| Bsp. Nr. | Monomere | | | | Ungesättigtes Silan aus | | | | |
|---|---|---|---|---|---|---|---|---|---|
| | MEMO[1)] | VTMO[2)] | DMDBO[3)] | GLYMO[4)] | Bsp. 1 | Bsp. 2 | Bsp. 3 | Bsp. 4 | Bsp. 5 |
| 6 | 66,4 | - | 27,3 | - | 6,3 | - | - | - | - |
| 7 | 62,5 | - | 25,7 | - | 11,8 | - | - | - | - |
| 8 | 66,4 | - | 27,3 | - | - | - | 6,3 | - | - |
| 9 | 55,9 | - | 23,0 | - | - | - | 21,1 | - | - |
| 10 | 66,4 | - | 27,3 | - | - | - | - | 6.3 | - |
| 11 | 62,5 | - | 25,7 | - | - | - | - | 11,8 | - |
| 12 | 38,7 | - | 31,8 | 8,6 | - | 20,9 | - | - | - |
| 13 | 66,4 | - | 27,3 | - | - | - | - | - | 6,3 |
| 14 | - | 54,2 | 37,3 | - | - | - | - | 8,5 | - |
| 15 | - | 44,0 | 30,4 | 18,7 | - | - | - | 6,9 | - |

1) γ-Methacryloxipropyltrimethoxisilan
2) Vinyltrimethoxisilan
3) Dimethyldibutoxisilan
4) γ-Glycidyloxipropyltrimethoxisilan

III. Herstellung der Überzüge :

## Beispiele 16-25

Die in den Beispielen 6 bis 15 beschriebenen Bindemittel wurden unverdünnt mit Tetraethylenglykoldiacrylat (TEGDA) in den in Tabelle 2 angegebenen Mischungsverhältnissen abgemischt. Jede Mischung rakelte man auf eine sorgfältig gereinigte Polymethylmethacrylat-Platte (=PMMA) auf wobei die durchschnittliche Schichtdicke 20 µm betrug. Die Härtung erfolgte in $N_2$-Atmosphäre durch Elektronenstrahlen mit einer Gesamtdosis von 10,6 Mrad. Im Taber-Abraser-Test nach ASTM-D-1044 wurde die Kratzfestigkeit der Lackfilme geprüft. (Reibrollen : CS-10F ; Belastung je Reibrolle : 500 g, Zyklenzahl : 250). Zur Bestimmung der Kratzfestigkeit diente die Trübungsmessung nach ASTM-D-1003 mittels der Trübungsmeßgerätes AUX-10 der Fa. Gardner. Hierfür wurde der angekratzte Lackfilm samt Substrat in den Strahlengang eines parallelen Lichtstrahls gebracht und der prozentuale Anteil des um mehr als 4° von der Horizontalen abweichenden Streulichts nach Abzug des Nullwertes als Maß für die Kratzfestigkeit angegeben. Die Haftung bestimmte man durch die Gitterschnittmethode nach DIN 53 151, wobei abweichend von dieser noch zusätzlich die eingeritzten Quadrate mit Tesafilm überklebt und dieser ruckartig wieder entfernt wurde.

Die gemessenen Werte für Haftung und Kratzfestigkeit sind in Tab. 2 zusammengefaßt.

Tabelle 2

| Bspr.-Nr. | Bindemittel: aus Bsp. | Bindemittel: TEGDA 1) | Δ% Trübung | Haftung |
|---|---|---|---|---|
| 16 | 6 | 1 : 5 | 0,9 | 0 |
| 17 | 7 | 1 : 2 | 0,6 | 0 |
| 18 | 8 | 1 : 3 | 0,6 | 0 |
| 19 | 9 | 1 : 3 | 0,6 | 0 |
| 20 | 10 | 1 : 6 | 0,6 | 0 |
| 21 | 11 | 1 : 2 | 0,5 | 0 |
| 22 | 12 | 1 : 2 | 1,0 | 0 |
| 23 | 13 | 1 : 3 | 0,8 | 0 |
| 24 | 14 | 1 : 4 | 1,0 | 0 |
| 25 | 15 | 1 : 2 | 0,8 | 0 |

1) TEGDA = Tetraethylenglykoldiacrylat

Die gehärteten Lackfilme wurden von organischen Lösungsmitteln wie Toluol, Aceton, Butylacetat, Butanol und Testbenzin auch nach 24 Stunden Einwirkung nicht angegriffen.

## Beispiel 26

1 Teil des Polysiloxans aus Beispiel 10 wurde mit 1 Teil Tetraethylenglykoldiacrylat abgemischt. Zu dieser Mischung wurden 2 % Cyclohexanonperoxid und 2 % einer 1 %igen Lösung von Cobaltoctoat in Styrol gegeben. Die Beschichtung der PMMA-Platte erfolgte durch Eintauchen des Substrats in die Lackmischung. Die Härtungszeit betrug 2 Stunden, die Härtungstemperatur 100 °C. Man erhielt einen harten Überzug mit guter Kratzfestigkeit (Δ % Trübung nach 250 Zyclen = 1,8).

**Ansprüche**

1. Härtbare Überzugsmittel auf Basis olefinisch ungesättigter Polysiloxane, dadurch gekennzeichnet, daß das olefinisch ungesättigte Polysiloxan ein Polykondensationsprodukt ist aus

a) 1-40 Gew.% eines mindestens zwei C-C-Doppelbindungen und mindestens eine Hydroxi- und/oder Alkoxigruppe pro Molekül enthaltenden Umsetzungsproduktes aus einem olefinisch ungesättigten Silan mit mindestens 2 Hydroxi- oder $C_1$-$C_4$-Alkoxigruppen, dessen olefinisch ungesättigter organischer Rest über eine C-Si-Bindung gebunden ist. und einem hydroxylgruppenhaltigen α,β-olefinisch ungesättigtem Monomeren

b) 20-80 Gew.% eines olefinisch ungesättigten Silans der allgemeinen Formel

$$R^1—Si(OR^2)_3$$

wobei $R^1$ für einen über eine C-Si-Bindung an das Si-Atom gebundenen Vinyl- oder (Meth) Acrylsäure-$C_2$-$C_8$-alkyl-esterrest und $R^2$ für Wasserstoff oder einen gesättigten Kohlenwasserstoffrest mit 1 bis 4 Kohlenstoffatomen stehen

c) 5-55 Gew.% eines gesättigten Silans der allgemeinen Formel

$$\begin{array}{c} R^4 \\ R^3 - Si - OR^2 \\ OR^2 \end{array}$$

wobei $R^2$ die oben angegebene Bedeutung hat, $R^3$ und $R^4$ untereinander gleich oder verschieden sind und für gesättigte Kohlenwasserstoffreste mit 1 bis 6 Kohlenstoffatomen oder gegebenenfalls $C_1$-$C_4$-alkylsubstituierte aromatische Kohlenwasserstoffreste stehen, und

d) 0-30 Gew.% eines epoxidgruppenhaltigen Silans mit mindestens 2 Hydroxi- oder $C_1$-$C_4$-Alkoxigruppen.

2. Härtbare Überzugsmittel nach Anspruch 1, dadurch gekennzeichnet, daß sie zusätzlich ein olefinisch ungestättigtes Umsetzungsprodukt aus (Meth)Acrylsäure und Polyalkoholen bzw. Polyetherolen in einem bis 8fachen Überschuß, bezogen auf die Gewichtsmenge des Polykondensationsprodukts, enthalten.

3. Verfahren zur Herstellung kratzfester Überzüge auf Kunststoffoberflächen, dadurch gekennzeichnet, daß man die härtbaren Überzugsmittel nach Anspruch 1 oder 1 in üblicher Weise auf Kunststoffoberflächen aufbringt und mittels ionisierender Strahlung, durch Wärmeeinwirkung in Gegenwart radikalliefernder Initiatoren oder Initiatorsysteme, oder durch Bestrahlung mit UV-Licht in Gegenwart üblicher Photoinitiatoren härtet.

4. Gegenstände aus Kunststoff, die nach einem Verfahren gemäß Anspruch 3 überzogen sind.

**Claims**

1. A curable coating agent based on an olefinically unsaturated polysiloxane, characterized in that the olefinically unsaturated polysiloxane is a polycondensate of

a) from 1 to 40 % by weight of a reaction product containing at least two carbon-carbon double bonds and at least one hydroxyl and/or alkoxy group per molecule, obtained from an olefinically unsaturated silane containing at least 2 hydroxyl or $C_1$-$C_4$-alkoxy groups, whose olefinically unsaturated organic radical is bonded via a C-Si bond, and a hydroxyl-containing α,β-olefinically unsaturated monomer,

b) from 20 to 80 % by weight of an olefinically unsaturated silane of the general formula

$$R^1—Si(OR^2)_3$$

where $R^1$ is a vinyl or $C_2$-$C_8$-alkyl acrylate or methacrylate radical bonded to the Si atom via a C-Si bond and $R^2$ is hydrogen or a saturated hydrocarbon radical of 1 to 4 carbon atoms,

c) from 5 to 55 % by weight of a saturated silane of the general formula

$$\begin{array}{c} R^4 \\ R^3 - Si - OR^2 \\ OR^2 \end{array}$$

where $R^2$ has the above meanings and $R^3$ and $R^4$ are identical or different and each is a saturated hydrocarbon radical of 1 to 6 carbon atoms or an unsubstituted or $C_1$-$C_4$-alkyl-substituted aromatic hydrocarbon radical, and

d) from 0 to 30 % by weight of an epoxide-containing silane containing at least 2 hydroxyl or $C_1$-$C_4$-alkoxy groups.

2. A curable coating agent as claimed in claim 1, characterized in that it additionally contains an olefinically unsaturated reaction product of acrylic acid or methacrylic acid and a polyalcohol or polymether-ol in an up to eightfold excess, based on the weight of the polycondensate.

3. A process for producing a scratch-resistant coating on the surface of a plastic, characterized in that a curable coating agent as claimed in claim 1 or 2 is applied in a conventional manner to the surface of a plastic and is cured by ionizing radiation, by exposure to heat in the presence of a free radical initiator or initiator system, or by irradiation with ultraviolet light in the presence of conventional photoinitiators.

4. A plastic article coated by a process as claimed in claim 3.

**Revendications**

1. Agents de revêtement durcissables à base de polysiloxanes à insaturation oléfinique, caractérisés par le fait que le polysiloxane à insaturation oléfinique est un produit de polycondensation de

a) 1-40 % en poids d'un produit de réaction contenant par molécule au moins deux doubles liaisons C-C et au moins un groupe hydroxy- et/ou alcoxy, d'un silane à insaturation oléfinique, ayant au moins 2 groupes hydroxy- ou alcoxy en $C_1$-$C_4$ et dont le reste organique à insaturation oléfinique est lié par l'intermédiaire d'une liaison C-Si, et d'un monomère à insaturation $\alpha,\beta$-oléfinique et à groupes hydroxyle,

b) 20-80 % en poids d'un silane à insaturation oléfinique de formule générale

$$R^1{-}Si(OR^2)_3$$

$R^1$ représentant un reste de vinylate ou (meth)acrylate d'alkyle en $C_2$-$C_8$ lié à l'atome Si par une liaison C-Si et $R^2$ représentant l'hydrogène ou un reste d'hydrocarbure saturé à 1 à 4 atomes de carbone,

c) 5-55 % en poids d'un silane saturé de formule générale :

$$R^3 - \overset{\displaystyle R^4}{\underset{\displaystyle OR^2}{Si}} - OR^2$$

$R^2$ ayant la signification donnée plus haut, $R^3$ et $R^4$ étant identiques ou différents l'un de l'autre et représentant des restes d'hydrocarbures saturés à 1 à 6 atomes de carbone ou des restes d'hydrocarbures aromatiques, éventuellement substitués par des alkyle en $C_1$-$C_4$, et

d) 0-30 % en poids d'un silane à groupes époxyde ayant au moins 2 groupes hydroxy ou alcoxy en $C_1$-$C_4$.

2. Agents de revêtement durcissables selon la revendication 1, caractérisés par le fait qu'ils contiennent, en outre, un produit de réaction à insaturation oléfinique d'acide (méth)acrylique et de polyalcools ou polyétheroles en excès jusqu'à 8 fois, par rapport au poids du produit de polycondensation.

3. Procédé de préparation de revêtements résistants à l'abrasion, sur surfaces en matière plastique, caractérisé par le fait que l'on applique, de manière usuelle, sur des surfaces de matière plastique, l'agent de revêtement durcissable selon la revendication 1 ou 2 et on le durcit au moyen de rayonnements ionisants par action thermique en présence d'initiateurs ou systèmes d'initiateurs fournissant des radicaux, ou par irradiation avec de la lumière U.V. en présence de photoinitiateurs usuels.

4. Objets en matière plastique, revêtus par un procédé selon la revendication 3.